(19) Europäisches Patentamt / European Patent Office / Office européen des brevets

(11) **EP 4 601 217 A1**

(12) **EUROPEAN PATENT APPLICATION**
published in accordance with Art. 153(4) EPC

(43) Date of publication:
**13.08.2025 Bulletin 2025/33**

(21) Application number: **23910471.4**

(22) Date of filing: **25.12.2023**

(51) International Patent Classification (IPC):
*H04B 7/22* (2006.01)

(52) Cooperative Patent Classification (CPC):
**H04B 7/22; H04L 27/02**

(86) International application number:
**PCT/CN2023/141489**

(87) International publication number:
**WO 2024/140545 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2022 CN 202211730962**

(71) Applicant: ZTE Corporation
**Shenzhen, Guangdong 518057 (CN)**

(72) Inventors:
• YUAN, Zhifeng
  **Shenzhen, Guangdong 518057 (CN)**
• LI, Weimin
  **Shenzhen, Guangdong 518057 (CN)**
• MA, Yihua
  **Shenzhen, Guangdong 518057 (CN)**
• LI, Zhigang
  **Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **BACKSCATTER COMMUNICATION METHOD AND APPARATUS, AND STORAGE MEDIUM**

(57)    The present disclosure provides a backscatter communication method and apparatus, and a storage medium. The backscatter communication method comprises: obtaining a first sequence, wherein the first sequence comprises at least one zero element and/or at least one non-zero element; and performing backscatter communication on the basis of the first sequence.

```
┌──────────────────────────────────────┐
│       OBTAIN A FIRST SEQUENCE        │──  S101
└──────────────────────────────────────┘
                   │
                   ▼
┌──────────────────────────────────────┐
│  PERFORM BACKSCATTER COMMUNICATION   │──  S102
│  ON THE BASIS OF THE FIRST SEQUENCE  │
└──────────────────────────────────────┘
```

FIG. 2

**Description**

This present disclosure claims a priority to Chinese Patent Application No. 202211730962.3, filed on December 30, 2022, the entire content of which is incorporated herein by reference.

TECHNICAL FIELD

The present disclosure relates to the field of communication technologies, and in particular, to a backscatter communication method, and a backscatter communication apparatus, and a storage medium.

BACKGROUND

Backscatter communication may adopt On-Off Keying (OOK) modulation or Amplitude Shift Keying (ASK) modulation, implementations of which are relatively simple. The backscatter communication may also be implemented by harvesting energy first and then communicating, and using Binary Phase Shift Keying (BPSK) modulation.

SUMMARY

In an aspect, the embodiments of the present disclosure provide a backscatter communication method, and the backscatter communication method includes: acquiring a first sequence, where the first sequence includes at least one zero element and/or at least one non-zero element; and performing backscatter communication based on the first sequence.

In another aspect, the embodiments of the present disclosure provide a backscatter communication method, and the backscatter communication method includes: acquiring a first sequence, where the first sequence includes at least one zero element and/or at least one non-zero element; and performing detection on a backscatter signal according to the first sequence, to acquire a detection result.

In yet another aspect, the embodiments of the present disclosure provide a backscatter communication apparatus. The backscatter communication apparatus includes: a first processing module, configured to acquire a first sequence, where the first sequence includes at least one zero element and/or at least one non-zero element; and a first communication module, configured to perform backscatter communication based on the first sequence.

In yet another aspect, the embodiments of the present disclosure provide a backscatter communication apparatus. The backscatter communication apparatus includes: a second processing module, configured to acquire a first sequence, where the first sequence includes at least one zero element and/or at least one non-zero element; and perform detection on a backscatter signal according to the first sequence, to acquire a detection result.

In yet another aspect, the embodiments of the present disclosure provide a communication apparatus, including: a memory and a processor; the memory and the processor are coupled; the memory is configured to store instructions executable by the processor; and the processor, when executing the instructions, implements the method according to the above aspects.

In yet another aspect, the embodiments of the present disclosure provide a computer-readable storage medium storing computer program instructions, and the computer program instructions, when executed by a computer, implement the method according to the above aspects.

In yet another aspect, the embodiments of the present disclosure provide a computer program product, the computer program product includes computer program instructions, and the computer program instructions, when executed, implement the method according to the above aspects.

BRIEF DESCRIPTION OF THE DRAWINGS

In order to describe technical solutions in the present disclosure more clearly, the drawings to be used in the embodiments of the present disclosure will be introduced briefly. Obviously, the drawings to be described below are merely drawings of some embodiments of the present disclosure, and those skilled in the art may also obtain other drawings according to these drawings.

FIG. 1 is a structural schematic diagram of a backscatter communication system, according to the embodiments of the present disclosure.

FIG. 2 is a flow chart of a backscatter communication method, according to the embodiments of the present disclosure.

FIG. 3 is a flow chart of another backscatter communication method, according to the embodiments of the present disclosure.

FIG. 4 is a flow chart of yet another backscatter communication method, according to the embodiments of the present disclosure.

FIG. 5 is a flow chart of yet another backscatter communication method, according to the embodiments of the present disclosure.

FIG. 6 is a flow chart of yet another backscatter communication method, according to the embodiments of the present disclosure.

FIG. 7 is a flow chart of yet another backscatter communication method, according to the embodiments of the present disclosure.

FIG. 8 is a flow chart of yet another backscatter communication method, according to the embodiments of the present disclosure.

FIG. 9 is a flow chart of yet another backscatter communication method, according to the embodiments of the present disclosure.

FIG. 10 is a flow chart of yet another backscatter communication method, according to the embodiments of the present disclosure.

FIG. 11 is a structural schematic diagram of a backscatter communication apparatus, according to the embodiments of the present disclosure.

FIG. 12 is a structural schematic diagram of another backscatter communication apparatus, according to the embodiments of the present disclosure.

FIG. 13 is a structural schematic diagram of a communication apparatus, according to the embodiments of the present disclosure.

## DETAILED DESCRIPTION

In order to enable those skilled in the art to better understand technical solutions of the embodiments of the present disclosure, the technical solutions in the present disclosure will be described below clearly and completely with reference to the drawings. Obviously, the described embodiments are merely some but not all of the embodiments of the present disclosure. All other embodiments obtained based on the embodiments of the present disclosure by those skilled in the art without paying any creative effort shall be included in the protection scope of the present disclosure.

It should be noted that in the present disclosure, the expressions such as "exemplary/exemplarily" or "for example" are used to present an example, illustration, or explanation. Any embodiment or design solution described with "exemplary/exemplarily" or "for example" in the present disclosure is not necessarily to be construed as preferred or advantageous over other embodiments or design solutions. Rather, the use of the expressions such as "exemplary/exemplarily" or "for example" is intended to present relevant concepts in a specific manner.

Hereinafter, the terms "first", "second", etc., are used for descriptive purposes only, but are not to be construed as indicating or implying relative importance or implicitly indicating a number of indicated technical features. Thus, features defined with "first" or "second", etc., may explicitly or implicitly include one or more of the features.

In the description of the present disclosure, unless otherwise stated, the character "/" means "or", and for example, "A/B" may mean A or B. Herein, "and/or" is merely an association relationship for describing associated objects, which represents that there may be three kinds of relationships. For example, 'A and/or B' may represent: only A, only B, or both A and B. In addition, "at least one" means one or more, and "a/the plurality of/multiple" means two or more.

Backscatter communication (also referred to as backward scattering communication or retro-reflective communication) may achieve communication through absorption or reflection of electromagnetic waves. In the backscatter communication, a sender (such as an electronic tag, etc.) does not need to actively generate electromagnetic waves, but transmits information by performing controlled reflections on electromagnetic waves generated by other devices. For example, the sender uses different reflections to represent different information. Since the electromagnetic waves will be absorbed or reflected back to a certain extent when encountering media with different impedance during propagation, in order to achieve different reflections, the impedance may be switched at the sender's antenna(s). For example, the impedance may be switched according to information that needs to be transmitted, to implement different reflections of electromagnetic waves, thereby implementing the transmission of the information.

In the backscatter communication, nodes or devices such as tags, in addition to not actively generating electromagnetic waves, may also have no external power source at all, such as a passive tag. In this case, the tag may obtain energy from the incident electromagnetic wave by a circuit that absorbs the electromagnetic wave energy. The manner of energy acquisition has a significant impact on the implementation complexity and backscatter performance of the passive tag.

Based on the aforementioned principles and features, adopting the backscatter communication technology may enable power consumption of the device to be reduced by several orders of magnitude. Thus, the backscatter communication technology exhibits significant advantages in applications such as the Internet of Things. Based on nodes or devices such as a passive tag, passive communication, zero-power consumption communication, passive Internet of Things (Passive IoT), or ambient Internet of Things (Ambient IoT) may be implemented. The ambient Internet of Things does not need an independent radio frequency signal transmitter to transmit an excitation signal to the tag. Instead, it uses a radio frequency signal in the surrounding environment, such as a broadcast television signal, a cellular network signal, or a wireless local area network signal, etc., as an excitation source, and implements communication by reflecting these electromagnetic waves differently, thereby enabling to further reduce the energy consumption of the system.

In the backscatter communication, when the tag performs the reflection, OOK or ASK modulation may be adopted. Each symbol may be in full absorption or full reflection states, so that 1 bit may be transmitted. The tag based on OOK or ASK modulation only needs two kinds of impedance, and thus only needs one radio frequency switch to implement the impedance switching. A receiver only needs simple energy detection to detect OOK or ASK-modulated signals. Therefore, the backscatter communication using OOK or ASK modulation is relatively simple to implement on both the transmitting side and the receiving side. However, since the distribution of bits "0" and "1" may be nonuniform, there will be a problem of poor stability of energy harvesting when using OOK or ASK modulation, which will cause the tag to use a larger capacitor. The tag may also use BPSK modulation. For example, before the communication, the tag absorbs enough energy by an impedance matching mode, to complete the energy harvesting. Then, the tag performs the full reflection on each symbol and implements a reflection coefficient of 1 or -1 by two kinds of impedance, thereby implementing the BPSK modulation. Compared with the OOK or ASK modulation, the BPSK modulation has better performance, but the complexity of the transmitting side and the receiving side will increase. Moreover, in the manner of harvesting energy first and then communicating, enough energy needs to be harvested before the communication, which requires the tag to have a large capacitor.

In addition, some backscatter communication technologies mainly adopt an orthogonal access mechanism (such as time division multiple access) in the traditional communication, when facing multi-user scenarios. However, since the symbol rate of the backscatter communication is very low, when there are many users, it will cause large communication delays and the number of users supported is relatively small. That is, some backscatter communication technologies have weak support capabilities for multi-user transmissions, support a small number of users and have low communication efficiency.

For the above problems, the embodiments of the present disclosure provide a backscatter communication method. The backscatter communication method includes: acquiring a first sequence, where the first sequence includes at least one zero element and/or at least one non-zero element; and performing backscatter communication based on the first sequence.

Based on this, by utilizing the first sequence, the user may harvest energy at a position corresponding to a zero element and reflect a signal at a position corresponding to a non-zero element, thereby implementing relatively stable energy harvesting in the backscatter communication, and it may use a relatively small capacitor. In addition, a plurality of users may acquire the first sequence and perform backscatter communication, respectively, thereby implementing better multi-user multiplexing, and then increasing the number of users supported and improving the communication performance of the system.

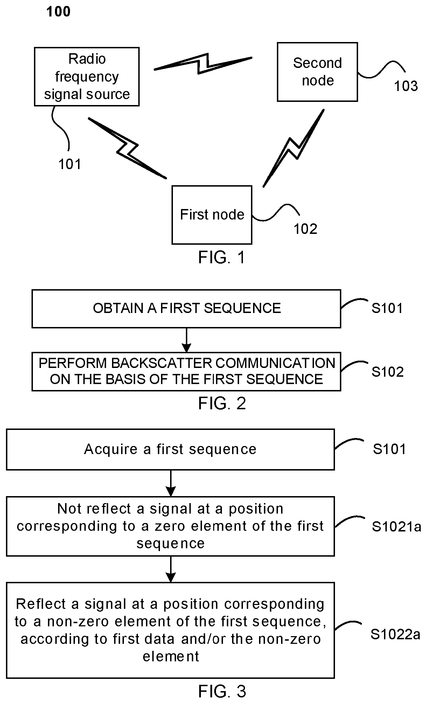

To facilitate the understanding of the technical solutions provided by the present disclosure, FIG. 1 shows a backscatter communication system, and the backscatter communication system uses a backscatter communication technology. As shown in FIG. 1, a backscatter communication system 100 includes: a radio frequency signal source 101, a first node 102, and a second node 103.

The radio frequency signal source 101 is an available radio frequency source. The radio frequency signal source 101 may be independently deployed, for example, a radio frequency transmitter may be specifically deployed as the radio frequency signal source; or the radio frequency signal source may not be independently deployed, for example, a same device may be used as both a radio frequency signal source and a receiver; or, the radio frequency signal source may come from a broadcasting television signal transmission tower, a mobile communication system base station, and a wireless fidelity (Wi-Fi) access point in the surrounding environment. The present disclosure does not limit the form of the radio frequency signal source. In an example, the radio frequency signal source 101 may transmit a wireless radio frequency signal within a communication frequency range.

The first node 102 may also be referred to as a transmitting device. The first node 102 includes at least one of: an electronic tag, a passive tag, a sensor, a terminal, a user equipment, a transmitter, or a backscatter communication node. As an example, the first node 102 may generate an induced current based on the wireless radio frequency signal transmitted by the radio frequency signal source 101, and then enter a working state. As an example, the first node 102 has two working states: reflection and non-reflection. The transmission of different bits or different symbols may be implemented by different working states. For example, when transmitting a bit "0", the first node 102 enters a working state that does not reflect a signal, and when transmitting a bit "1", the first node 102 enters a working state that reflects a signal. As an example, the first node 102 may enter different working states by switching the impedance, for example, the first node 102 may enter a signal-reflected state when the impedance is adjusted to be completely mismatched, and enter a non-signal-reflected state or a signal-received state when the impedance is adjusted to be completely matched. When in the reflection state, different signals may also be reflected by switching the impedance. For example, different signals may be reflected by two different kinds of impedance, to implement the transmission of the symbol "1" or "-1".

The second node 103 may also be referred to as a receiving device. The second node 103 includes at least one of: a reader/writer, a card reader, a receiver, a receiving node, a receiving device, a base station, a network device, a backscatter communication terminal, or a backscatter communication device, etc. As an example, the second node 103 may be used to receive a signal transmitted by the radio frequency signal source 101 and/or a signal reflected by the first node 102.

In some embodiments, the above-mentioned radio frequency signal source 101, the first node 102 and the second node 103 may be deployed independently, or deployed in a combination as needed. For example, the radio frequency signal source 101 and the second node 103 may be deployed in a combination, which is not limited to the present disclosure.

In addition, the number of the radio frequency signal sources 101, the number of the first nodes 102 or the number of the second nodes 103 mentioned above in the backscatter communication system 100 may be one or more, which is not limited to the present disclosure.

It should be noted that, the backscatter communication system shown in FIG. 1 is provided only for more clearly explaining the technical solutions of the present disclosure, and does not constitute a limitation on the present disclosure. Those skilled in the art can know that, with the evolution of the network architecture and the emergence of new business scenarios, the technical solutions provided by the present disclosure are also applicable to similar technical problems.

The backscatter communication method provided by the embodiments of the present disclosure may be applied to systems with various communication standards, including but not limited to: long term evolution (LTE) systems, various versions of systems based on LTE evolution, fifth generation (5G) systems, and next-generation communication systems such as New Radio (NR), etc. In addition, the backscatter communication method provided by the embodiments of the present disclosure may also be applicable to future-oriented communication technologies, etc.

As shown in FIG. 2, FIG. 2 is a flow chart of a backscatter communication method provided by the embodiments of the present disclosure. Take an execution entity of the method as the first node as an example, for explanation below. Referring to FIG. 2, the method includes S101 and S102.

In S101, acquire a first sequence.

The first sequence includes at least one zero element and/or at least one non-zero element.

In some embodiments, the non-zero element includes at least one of: 1, 1i, -1, and -1i. For example, values of the non-zero elements may be 1. For another example, the values of the non-zero elements may include 1 and -1. For another example, the values of the non-zero elements may include 1i and -1i. For another example, the values of the non-zero elements may include: 1, 1i, -1, and -1i. The i is an imaginary unit.

In some embodiments, a length of the first sequence is L, and L is an integer greater than 1. As an example, L may be any integer from 2 to 8.

In some embodiments, a number of zero elements of the first sequence is equal to a half of the length L of the first sequence; or, a number of zero elements of the first sequence is equal to an integer obtained by rounding down L/2; or, a number of zero elements of the first sequence is equal to an integer obtained by rounding up L/2. Based on this, when the first node performs the backscatter communication according to the first sequence, the first node may not reflect a signal and harvest energy at a position corresponding to a zero element, and reflect a signal at a position corresponding to a non-zero element, thereby implementing relatively stable energy harvesting.

In some other embodiments, the number of zero elements of the first sequence is equal to the length L of the first sequence minus 1.

In yet other embodiments, the number of zero elements of the first sequence is equal to 1.

In some embodiments, the first sequence is a sparse sequence. It should be understood that, the sparse sequence includes a certain number or a certain proportion of zero elements. This helps the first node to harvest more energy at the position corresponding to the zero element, when performing the backscatter communication based on the first sequence.

In some embodiments, the first sequence may be preset, or may be determined according to system configuration information, or may be determined according to information received from the second node. It should be understood that, the present disclosure does not limit the configuration method of the first sequence.

In some embodiments, the first sequence may be acquired according to at least one of at least one sequence set, data to be transmitted, first data, or pilot. The first data includes a bit or a symbol generated according to the data to be transmitted. The data to be transmitted includes at least one of following information: identity information, information of the first sequence, information of at least one pilot, state information, sensing information, indication information, load data, and a specified message. The method for acquiring the first sequence will be described in detail in S1011, S1012, S1013 and S1014 below, and the reference may be made to the following description.

In S102, perform backscatter communication based on the first sequence.

In some embodiments, when performing backscatter communication based on the first sequence, the backscatter communication may be performed according to the first sequence and first data; or, the backscatter communication may be performed on the first data according to the first sequence; or, the backscatter communication may be performed on the first sequence; or, second data may be acquired according to the first data and the first sequence, and then the backscatter communication may be performed on the second data.

In some embodiments, as shown in FIG. 3, step S102 is implemented as S1021a and S1022a, for example.

In S1021a, not reflect a signal at a position corresponding to a zero element of the first sequence.

In some embodiments, at the position corresponding to the zero element of the first sequence, the first node may perform energy harvesting, so as to obtain energy from an external environment during the communication.

In S1022a, reflect a signal at a position corresponding to a non-zero element of the first sequence, according to first data and/or the non-zero element.

The first data includes a bit or a symbol generated according to the data to be transmitted. Exemplarily, the first data includes at least one data bit generated according to the data to be transmitted, or at least one modulated symbol generated according to the data to be transmitted. For example, the first data may be a BPSK-modulated symbol, or a quadrature phase shift keying (QPSK)-modulated symbol, or a differential-modulated-symbol. It should be understood that, the embodiments of the present disclosure do not limit the modulation manner of the data.

As an example, in a case where a signal is reflected according to the first data, the first node may determine an adopted impedance state or circuit state, according to the first data, at the position corresponding to the non-zero element of the first sequence. It should be understood that, when the first data takes a zero symbol, the first node does not reflect a signal; when the first data takes different non-zero symbols, the first node may adopt different impedance states or circuit states, so that different non-zero symbols correspond to different reflection signals, so that the receiving end (for example, the second node) may distinguish different symbols.

As another example, in a case where a signal is reflected according to the first data and the value of the non-zero element, the first node may determine the adopted impedance state or circuit state according to the first data and the value of the non-zero element. Exemplarily, the first node may multiply the first data with the value of the non-zero element of the first sequence, to obtain a symbol to be transmitted, and reflect the signal according to the symbol to be transmitted. For example, the first node may determine the adopted impedance state or circuit state according to the symbol to be transmitted. It should be understood that, when the symbol to be transmitted is a zero symbol, the first node does not reflect the signal; when the symbol to be transmitted is a non-zero symbol, the first node reflects the signal. When reflecting the signal according to different non-zero symbols, the first node may adopt different impedance states or circuit states, so that the receiving end (e.g., the second node) distinguishes different symbols.

As another example, in a case where a signal is reflected according to the non-zero element, the first node may determine an adopted impedance state or circuit state according to the non-zero element. For example, the first node may use the non-zero element as a symbol to be transmitted, and reflect the signal according to the symbol to be transmitted. It should be understood that, for different non-zero elements, the first node may adopt different impedance states or circuit states, so that the receiving end (e.g., the second node) distinguishes different symbols.

It should be noted that, there is no strict sequential order between S1021a and S1022a, and in some embodiments, S1021a and S1022a may be performed in an order different from the above description.

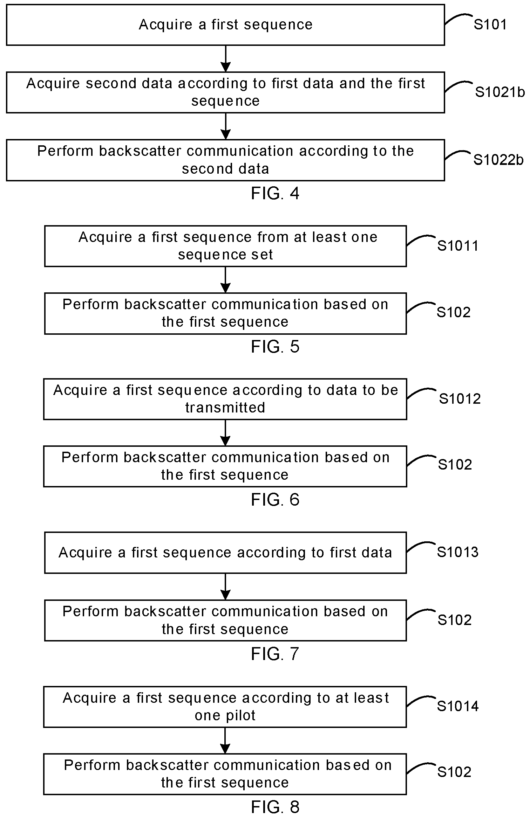

In some other embodiments, as shown in FIG. 4, S102 is implemented as S1021b and S1022b, for example.

In S1021b, acquire second data according to first data and the first sequence.

The second data includes at least one zero symbol and/or at least one non-zero symbol.

In some examples, the second data includes at least L symbols, where L is the length of the first sequence.

In some examples, S1021b is implemented as, for example: performing an extension processing on the first data by using the first sequence, to obtain the second data. Exemplarily, in a case where the first data includes one symbol, the extension processing is performed on the first data by using the first sequence with the length of L, to obtain the second data, and the second data includes L symbols. Positions of zero symbols and non-zero symbols of the second data correspond to the positions of zero elements and non-zero elements of the first sequence, respectively.

For example, if the first data includes the symbol -1 and the first sequence is [1, 0, 1, 0], the second data may be a data symbol sequence (i.e., the second sequence) [-1, 0, -1, 0] obtained by multiplying the first data with the first sequence. It can be seen that, the positions of the zero symbols and the non-zero symbols of the second sequence correspond to the positions of the zero elements and the non-zero elements of the first sequence, respectively.

In S1022b, perform the backscatter communication according to the second data.

As an example, S1022b is implemented as, for example: not reflecting a signal at a position corresponding to a zero symbol of the second data; and reflecting a signal at a position corresponding to a non-zero symbol of the second data, according to the non-zero symbol.

It should be understood that, the first node, when performing the backscatter communication according to the second data, may determine the adopted impedance state or circuit state according to the second data. For example, at the positions corresponding to the zero symbols of the second data, the first node adopts an impedance state or a circuit state that does not reflect a signal; and at the positions corresponding to different non-zero symbols of the second data, the first node adopts different impedance states or circuit states to reflect different signals. For example, the first node may adopt a first impedance or a first impedance state when transmitting a symbol 1, and adopt a second impedance or a second impedance state when transmitting a symbol -1.

In some embodiments, when performing the backscatter communication, the first node may reflect a signal according to data (e.g., a bit or a symbol) to be transmitted. The first node may determine the adopted impedance state or circuit state according to the data to be transmitted, so as not to reflect the signal or to reflect the corresponding signal; or, the first node may load or modulate the data onto the reflected signal; or, the first node may adjust the reflected signal according to the data. The reflected signal is received by the receiving end (e.g., the second node). The first node may reflect the signal in a loading manner, modulation manner or adjustment manner that meets requirements, including but not limited to: amplitude shift keying (ASK) modulation, frequency shift keying (frequency-shift keying, FSK) modulation, phase shift keying (PSK) modulation, or differential modulation, etc., which is not limited to the present disclosure.

The technical solutions provided by the embodiments of the present disclosure may implement the relatively stable energy harvesting, enable a plurality of users to respectively acquire the first sequences and perform the backscatter communication, to implement better multi-user multiplexing, thereby increasing the number of users supported and improving the communication performance of the system.

For ease of understanding, some possible manners of acquiring the first sequence are exemplarily introduced below.

In some embodiments, as shown in FIG. 5, S101 is implemented, for example, as S1011. In S1011, acquire the first sequence from at least one sequence set.

The at least one sequence set includes at least one non-orthogonal sequence set and/or at least one orthogonal sequence set.

As an example, an orthogonal sequence set includes L sequences with a length of L. Exemplarily, the orthogonal sequence set is a unit matrix sequence set.

As another example, a non-orthogonal sequence set includes N sequences with a length of L, where N is an integer greater than 1 and N is greater than L. In an example, the non-orthogonal sequence set includes an Equiangular Tight Frame (ETF) sequence set. The mutual correlation between any two sequences in the ETF sequence set is equal. In an example, the non-orthogonal sequence set includes a sequence set consisting of a plurality of orthogonal sequence sets. In an example, the non-orthogonal sequence set includes a sequence set consisting of at least one orthogonal sequence set and at least one non-orthogonal sequence set. It should be understood that, in a case of acquiring the first sequence from the at least one non-orthogonal sequence set, since the sequences are non-orthogonal, the number of candidate sequences that can be used is relatively large, and then, the first sequences respectively acquired by the plurality of users are very likely to be different, which is conducive to increasing the number of users supported, thereby improving the communication performance and the communication efficiency of the system.

In some examples, the first node randomly selects, from the at least one sequence set, a sequence as the first sequence, or the first node acquires the first sequence from the at least one sequence set according to a first specified rule. For example, the first node may determine an index of the first sequence according to the first specified rule, and then acquire the first sequence from the at least one sequence set according to the index. In some other examples, the first node may also acquire the first sequence from the at least one sequence set according to first indication information transmitted by the second node.

The first sequence set to the eighth sequence set are taken as examples below, to exemplarily show possible implementations of the at least one sequence set.

As an example, the at least one sequence set includes a first sequence set, and the first node acquires the first sequence from the first sequence set. The first sequence set includes 16 sequences with a length of 6 as described below: [1, 0, 1, 0, 1, 0]; [-1, 0, 1, 0, -1, 0]; [1, 0, -1, 0, -1, 0]; [-1, 0, -1, 0, 1, 0]; [1, 0, 0, 1, 0, 1]; [-1, 0, 0, 1, 0, -1]; [1, 0, 0, -1, 0, -1]; [-1, 0, 0, -1, 0,1]; [0, 1, 1, 0, 0, 1]; [0, -1, 1, 0, 0, -1]; [0, 1, -1, 0, 0, -1]; [0, -1, -1, 0, 0, 1]; [0, 1, 0, 1, 1, 0]; [0, -1, 0, 1, -1, 0]; [0, 1, 0, -1, -1, 0]; and [0, -1, 0, -1, 1, 0].

The first sequence set is an ETF sequence set, each sequence includes three zero elements and three non-zero elements, and the values of the non-zero elements are 1 or -1. Moreover, the distribution of zero elements and non-zero elements in the first sequence set is relatively uniform, and at most two consecutive elements are non-zero. Then, when the backscatter communication is performed according to the first sequence, the relatively stable energy harvesting may be implemented, and the signal is reflected at a maximum of two consecutive positions, and the first node may use a relatively small capacitor. In addition, the first sequence set contains a large number of sequences. Herein, an overload ratio is defined as the number of sequences in the set divided by the sequence length. Then, the overload ratio of the first sequence set is 16/6. Therefore, when the first sequence set is used for the backscatter communication, it is beneficial for the plurality of users to select different first sequences, thereby facilitating an increase in the number of users supported.

As another example, the at least one sequence set includes a second sequence set, and the first node acquires the first sequence from the second sequence set. The second sequence set includes 16 sequences with a length of 6 as described below: [1, 1, 1, 0, 0, 0]; [-1, 1, -1, 0, 0, 0]; [1, -1, -1, 0, 0, 0]; [-1, -1, 1, 0, 0, 0]; [1, 0, 0, 1, 1, 0]; [-1, 0, 0, 1, -1, 0]; [1, 0, 0, -1, -1, 0]; [-1, 0, 0, -1, 1, 0]; [0, 1, 0, 1, 0, 1]; [0, -1, 0, 1, 0, -1]; [0, 1, 0, - 1, 0, -1]; [0, -1, 0, -1, 0, 1]; [0, 0, 1, 0, 1, 1]; [0, 0, -1, 0, 1, -1]; [0, 0, 1, 0, -1, -1]; and [0, 0, -1, 0, -1, 1].

The second sequence set is also an ETF sequence set. Each sequence includes three zero elements and three non-zero elements. The values of the non-zero elements are 1 or -1. Moreover, there are sequences with three consecutive non-zero elements in the second sequence set, and then, when the sequences are used for the backscatter communication, the signal will be reflected at three consecutive positions, and the first node may use a moderate or slightly larger capacitor for the backscatter communication. Similarly, the second sequence set contains a large number of sequences and has a large overload ratio (the overload ratio is 16/6). Therefore, when the second sequence set is used for the backscatter communication, it is beneficial for the plurality of users to select different first sequences, thereby facilitating an increase in the number of users supported.

As yet another example, the at least one sequence set includes a third sequence set, and the third sequence set includes 12 sequences with a length of 4 as described below: [1, 1, 0, 0]; [1, -1, 0, 0]; [1, 0, 1, 0]; [1, 0, -1, 0]; [1, 0, 0, 1]; [1, 0, 0, -1]; [0, 1, 1, 0]; [0, 1, -1, 0]; [0, 1, 0, 1]; [0, 1, 0, -1]; [0, 0, 1, 1]; and [0, 0, 1, -1]. Each sequence in the third sequence set, includes two zero elements and two non-zero elements, and the values of the non-zero elements are 1 or -1. When the sequences in the third sequence set are used for the backscatter communication, better energy harvesting may be implemented. Moreover, since there is a large number of sequences and the overload ratio is large (the overload ratio is 12/4 = 3), a large number of users may be supported.

As yet another example, the at least one sequence set includes a fourth sequence set, and the fourth sequence set includes 28 sequences with a length of 7 as described below: [1, 1, 1, 0, 0, 0, 0]; [-1, 1, -1, 0, 0, 0, 0]; [1, -1, -1, 0, 0, 0, 0]; [-1, -1, 1, 0, 0, 0, 0]; [1, 0, 0, 1, 1, 0, 0]; [-1, 0, 0, 1, -1, 0, 0]; [1, 0, 0, -1, -1, 0, 0]; [-1, 0, 0, -1, 1, 0, 0]; [1, 0, 0, 0, 0, 1, 1]; [-1, 0, 0, 0, 0, 1, -1]; [1, 0, 0, 0, 0, -1, -1]; [-1, 0, 0, 0, 0, -1, 1]; [0, 1, 0, 1, 0, 1, 0]; [0, -1, 0, 1, 0, -1, 0]; [0, 1, 0, -1, 0, -1, 0]; [0, -1, 0, -1, 0, 1, 0]; [0, 1, 0, 0, 1, 0, 1]; [0, -1, 0, 0, 1, 0, -1]; [0, 1, 0, 0, -1, 0, -1]; [0, -1, 0, 0, -1, 0, 1]; [0, 0, 1, 1, 0, 0, 1]; [0, 0, -1, 1, 0, 0, -1]; [0, 0, 1, -1, 0, 0, -1]; [0, 0, -1, -1, 0, 0, 1]; [0, 0, 1, 0, 1, 1, 0]; [0, 0, -1, 0, 1, -1, 0]; [0, 0, 1, 0, -1, -1, 0]; and [0, 0, -1, 0, -1, 1, 0].

The fourth sequence set is also an ETF sequence set. Each sequence includes four zero elements and three non-zero elements. The values of the non-zero elements are 1 or -1. When the sequences in the fourth sequence set are used for the backscatter communication, since each sequence has more zero elements, better energy harvesting may be implemented, which may be used for backscatter communication with a relatively long distance. Moreover, since there are more sequences and the overload ratio is large (the overload ratio is 28/7 = 4), a larger number of users may be supported.

As yet another example, the at least one sequence set includes a fifth sequence set, and the fifth sequence set includes 8 sequences with a length of 5 as described below: [1, 1, 1, 0, 0]; [-1, 1, 1, 0, 0]; [1, -1, 1, 0, 0]; [1, 1, -1, 0, 0]; [0, 0, 1, 1, 1]; [0, 0, -1, 1, 1]; [0, 0, 1, -1, 1]; and [0, 0, 1, 1, -1]. It can be seen that, each sequence in the fifth sequence set includes two zero elements and three non-zero elements, and the values of the non-zero elements are 1 or -1. When the sequences in the sequence set are used for the backscatter communication, since each sequence has two zero elements, that is, there may be two positions used for energy harvesting, thus it may be used for backscatter communication with a relatively short distance.

As yet another example, the at least one sequence set includes a sixth sequence set, the sixth sequence set includes 6 sequences with a length of 3 as described below: [1, 1, 0]; [1, -1, 0]; [1, 0, 1]; [1, 0, -1]; [0, 1, 1]; and [0, 1, -1]. It can be seen that, each sequence in the sixth sequence set includes one zero element and two non-zero elements, and the values of the non-zero elements are 1 or -1. When the sequences in the sequence set are used for the backscatter communication, since each sequence has one zero element, that is, there may be only one position used for energy harvesting, thus it may be used for backscatter communication with a short distance.

As yet another example, the at least one sequence set includes a seventh sequence set, and the seventh sequence set includes two sequences with a length of 2 as described below: [1, 0]; and [0, 1]. It can be seen that, each sequence in the seventh sequence set includes 1 zero element and 1 non-zero element, and the value of the non-zero element is 1. When the sequences in the seventh sequence set are used for the backscatter communication, a first node (such as the electronic tag) may harvest energy at a position of a second element and reflect the signal at a position of a first element according to a first sequence, and another first node may harvest energy at a position of a first element and reflect the signal at a position of a second element according to a second sequence. In this way, the signals of the two first nodes received by the second node (such as the card reader or base station, etc.) will not interfere with each other.

As yet another example, the at least one sequence set includes an eighth sequence set, and the eighth sequence set includes four sequences with a length of 4 as described below: [1, 0, 0, 0]; [0, 1, 0, 0]; [0, 0, 1, 0]; and [0, 0, 0, 1]. It can be seen that, each sequence in the eighth sequence set includes three zero elements and one non-zero element, and the value of the non-zero element is 1. In this way, if a plurality of first nodes respectively perform the backscatter communication according to different sequences in the eighth sequence set, the plurality of first nodes will not interfere with each other. In addition, the first nodes may harvest energy at positions of the three zero elements and reflect the signal at a position of one non-zero element, so that more energy may be collected, which is conducive to implementing backscatter communication with a long distance or a large coverage.

It should be noted that, the seventh sequence set and the eighth sequence set are both unit matrix sequence sets. It should be understood that, unit matrix sequence sets with other lengths may also be used, which are not limited to the present disclosure. In addition, the values of the non-zero elements in the first sequence set to the eighth sequence set mentioned above may also be 1i or -1i. For example, element 1 may be replaced by 1i, and element -1 may be replaced by -1i, where i is an imaginary unit. The values of non-zero elements may also be other values, which are not limited herein.

In some other embodiments, as shown in FIG. 6, S101 is implemented as S1012, for example. In S1012, acquire the first sequence according to data to be transmitted.

The data to be transmitted includes information of the first sequence, or the data to be transmitted includes first specified data for indicating information of the first sequence.

As an example, the data to be transmitted includes at least one of following information: identity information, information of the first sequence, information of at least one pilot, state information, sensing information, indication information, load data, and a specified message. In an example, as described above, the information of the first sequence may be indicated by the first specified data.

The identity information includes identity information of the first node (e.g., the nodes or devices such as the electronic tag or sensor), which is used for identifying the identity. The information of the first sequence is used to indicate the first sequence. The information of at least one pilot is used to indicate the at least one pilot. The state information includes a state situation of the first node. The sensing information includes information sensed by the first node. The indication information includes information indicating a specified situation or a preset situation. The load data includes load or data to be transmitted in the first node. The specified message includes a message representing a specified content or a specified function.

In some other embodiments, as shown in FIG. 7, S101 is implemented as S1013, for example. In S1013, acquire the first sequence according to first data.

As an example, the first data includes a bit or a symbol generated according to data to be transmitted.

As an example, at least one data bit may be mapped or modulated into a sequence, and different data bits may be mapped or modulated into different sequences. For example, 1 bit is mapped or modulated into the first sequence with a length of L, or two bits are mapped or modulated into the first sequence with a length of L. If the bits are different, the first sequences obtained by mapping or modulation are also different. Then, the mapped or modulated first sequence may be acquired according to the data bits, and then the backscatter communication may be performed according to the first sequence.

As another example, at least one data symbol may be mapped or modulated into a sequence, and different data symbols may be mapped or modulated into different sequences. For example, 1 symbol is mapped or modulated into the first sequence with a length of L. If the symbols are different, the first sequences obtained by mapping or modulation are also different. Then, the mapped or modulated first sequence may be acquired according to the data symbols, and then the backscatter communication may be performed according to the first sequence.

As another example, for multiple data symbols or multiple groups of data symbols, the corresponding first sequences may be acquired, respectively.

In some other embodiments, as shown in FIG. 8, S101 is implemented as S1014, for example. In S1014, acquire the first sequence according to at least one pilot.

In some examples, the pilot includes at least one of a preamble, a reference signal, a reference symbol, and a training sequence.

In some examples, a pilot corresponds to a group of pilot parameters, and pilot parameters corresponding to a plurality of pilots may be the same or different. The pilot parameters include at least one of a transmission resource position used by the pilot, a pilot sequence, a pilot symbol, and power or energy of the pilot.

In an example, there is an association relationship between the pilot and the first sequence. For example, there is a one-to-one correspondence between pilots and first sequences, or a plurality of pilots correspond to a first sequence. In an example, there is an association relationship between a pilot set consisting of at least one pilot and a sequence set consisting of at least one first sequence. For example, there is a one-to-one relationship or a many-to-one relationship between pilots in the pilot set and sequences in the sequence set.

In some examples, S1014 is implemented as: acquiring the first sequence corresponding to the at least one pilot according to an association relationship between the at least one pilot and the first sequence.

In some embodiments, the first node may also generate at least one pilot and perform the backscatter communication according to the at least one pilot. As an example, the first node may acquire the first sequence according to the at least one pilot, and perform the backscatter communication based on the first sequence. In an example, the first node may generate at least one pilot according to the data to be transmitted, where the data to be transmitted includes: information of the at least one pilot, or second specified data for indicating information of the at least one pilot.

In some embodiments, the first node may also not transmit any pilot, and only perform the backscatter communication for the data to be transmitted.

In addition, the embodiments shown in FIG. 5 to FIG. 8 are only examples, and there may be other manners for acquiring the first sequence. Exemplarily, S101 may be implemented as, for example: acquiring the first sequence according to a second specified rule. For example, taking the second specified rule as a preset sequence generation rule as an example, the first node may generate the first sequence according to the sequence generation rule. It should be understood that, the embodiments of the present disclosure do not limit the method for acquiring the first sequence.

In some embodiments, the first sequence may be a specified sequence, such as an all-0 sequence and/or an all-1 sequence, or a system-specified sequence. In this way, some specific communication scenarios or situations, such as communication start, communication end, or communication failure, etc., may be indicated according to the first sequence. It should be understood that, the embodiments of the present disclosure do not limit the form of the specified sequence.

In some embodiments, the first data may be specified data. For example, the specified data may be system-specified, and the function or meaning of the specified data may be considered to be known by the sender and the receiver. Then, the above-mentioned backscatter communication method may be implemented as: performing the backscatter communication according to the first data and the first sequence, which may be used to indicate the specified function, specified information or specified situation.

In some embodiments, the backscatter communication method provided by the embodiments of the present disclosure may be implemented as: acquiring first data; acquiring a first sequence; and performing backscatter communication according to the first data and the first sequence. The implementations of acquiring the first data, acquiring the first sequence, and performing the backscatter communication according to the first data and the first sequence, may refer to the foregoing description, which will not be repeated herein.

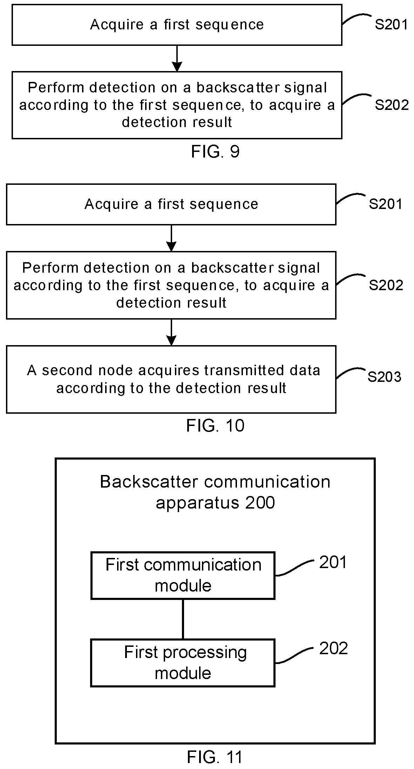

On the other hand, as shown in FIG. 9, the embodiments of the present disclosure further provide a backscatter communication method, which will be described below by taking an execution entity of the method as the second node as an example. Referring to FIG. 9, the method includes the following S201 and S202.

In S201, acquire a first sequence.

The first sequence includes at least one zero element and/or at least one non-zero element.

In some embodiments, the value of the non-zero element includes at least one of: 1, 1i, -1, and -1i. For the relevant content of the first sequence, the reference may be made to the description above, which will not be repeated herein.

In some embodiments, S201 may be implemented as, for example: acquiring, by the second node, the first sequence from at least one sequence set. The at least one sequence set includes at least one non-orthogonal sequence set and/or at least one orthogonal sequence set, and the content of the at least one sequence set may refer to the description above, which will not be repeated herein. As an example, the second node may use each sequence in the at least one sequence set as a first sequence, and then perform S202 below according to the first sequence.

In some other embodiments, S201 may be implemented as, for example: performing, by the second node, sequence identification according to a backscatter signal, to acquire at least one identified sequence, and using the at least one identified sequence as the first sequence. As an example, since the backscatter signal is generated by performing backscatter communication according to the first sequence, the sequence identification may be performed by the backscatter signal, to acquire the first sequence used by the first node.

In some other embodiments, S201 may be implemented as, for example: performing, by the second node, detection on a backscatter signal of at least one pilot, to acquire a detection result of the at least one pilot; and acquiring the first sequence according to the detection result of the at least one pilot. For the relevant content of the pilot, the reference is made to the description above, which will not be repeated herein.

Exemplarily, the detection result of the at least one pilot includes a channel estimation result of the at least one pilot and/or at least one identified pilot. The second node may determine the first sequence according to the at least one identified pilot. In some examples, the detection result of the at least one pilot may also include a pilot parameter of the at least one pilot, so that the second node identifies the pilot according to the pilot parameter.

In S202, perform detection on a backscatter signal according to the first sequence, to acquire a detection result.

In some embodiments, S202 is implemented as, for example: performing, by the second node, detection on the backscatter signal according to a plurality of first sequences in at least one sequence set, to acquire the detection result. Exemplarily, the second node performs detection on the backscatter signal according to each first sequence in at least one sequence set, to obtain a detection result corresponding to each first sequence.

In some embodiments, S202 is implemented as, for example: performing detection on the backscatter signal according to the first sequence and the acquired detection result of the at least one pilot. The detection result of the at least one pilot includes a channel estimation result of the at least one pilot and/or at least one identified pilot.

In some embodiments, as shown in FIG. 10, after step S202, the method further includes S203. In S203, a second node acquires transmitted data according to the detection result.

In some embodiments, at least one of the following information is acquired from the transmitted data: identity information, information of the first sequence, information of at least one pilot, state information, sensing information, indication information, load data, and a specified message.

In some examples, acquiring, by the second node, the transmitted data according to the detection result may be implemented as: performing, by the second node, demodulation and decoding according to the detection result, to acquire a decoding result, where the decoding result includes the transmitted data.

It should be understood that, the transmitted data shown in S203 may be data corresponding to the data to be transmitted that was sent by the first node. In a case where the detection or decoding is correct, it may be considered that the above-mentioned transmitted data is the same as the data to be transmitted that was sent by the first node.

The backscatter communication method provided by the embodiments of the present disclosure may implement relatively stable energy harvesting, enable a plurality of users to respectively acquire the first sequences and perform the backscatter communication, to implement better multi-user multiplexing, thereby increasing the number of users supported and improving the communication performance of the system.

The above introduces the solutions of the embodiments of the present disclosure mainly from the perspective of the method. A backscatter communication apparatus is also shown below, which is used to perform the backscatter communication method in any of the above embodiments and possible implementations thereof. It can be understood that the backscatter communication apparatus includes the corresponding hardware structures and/or software modules for performing various functions in order to achieve the above-mentioned backscatter communication method. Those skilled in the art should easily recognize that the present disclosure can be implemented in the form of hardware or a combination of hardware and computer software, in conjunction with the method steps of various examples described in the embodiments of the present disclosure. Whether a certain function is performed via hardware or computer software driving hardware, depends on the specific application and restrictive conditions on the design of the technical solutions. Professional technicians may use different methods to implement the described functions for each specific application, but such implementation should not be considered beyond the scope of the present disclosure.

In the embodiments of the present disclosure, the backscatter communication apparatus may be divided into functional modules according to the above-mentioned method embodiments, and for example, each functional module may be divided corresponding to each function, or two or more functions may be integrated into one functional module. The above-mentioned integrated module may be implemented in the form of hardware or may be implemented in the form of software. It should be noted that the division of modules in the embodiments of the present disclosure is illustrative, and is merely a kind of logical functional division, and there may be other division methods in actual implementations. The example in which each functional unit may be divided corresponding to each function is taken for explanation below.

FIG. 11 is a structural schematic diagram of a backscatter communication apparatus, provided by the embodiments of the present disclosure. As shown in FIG. 11, the backscatter communication apparatus 200 includes: a first communication module 201 and a first processing module 202.

The first processing module 202 is configured to acquire a first sequence, and the first sequence includes at least one zero element and/or at least one non-zero element.

The first communication module 201 is configured to perform backscatter communication based on the first sequence.

In some embodiments, a value of the non-zero element includes at least one of: 1, 1i, -1 and -1i.

In some embodiments, a length of the first sequence is L, where L is an integer greater than 1; and a number of zero elements of the first sequence is equal to a half of L, or a number of zero elements of the first sequence is equal to an integer obtained by rounding down L/2, or a number of zero elements of the first sequence is equal to an integer obtained by rounding up L/2, or a number of zero elements of the first sequence is equal to L minus 1, or a number of zero elements of the first sequence is equal to 1.

In some embodiments, the first processing module 202 is, for example, configured to acquire the first sequence from at least one sequence set; where the at least one sequence set includes at least one non-orthogonal sequence set and/or at least one orthogonal sequence set, the at least one non-orthogonal sequence set includes N sequences with a length of L, N is an integer greater than 1 and N is greater than L, or the at least one non-orthogonal sequence set includes an equiangular tight frame (ETF) sequence set.

In some embodiments, the first processing module 202 is, for example, configured to acquire the first sequence from a first sequence set, where the first sequence set includes the following 16 sequences with a length of 6: [1, 0, 1, 0, 1, 0]; [-1, 0, 1, 0, -1, 0]; [1, 0, -1, 0, -1, 0]; [-1, 0, -1, 0, 1, 0]; [1, 0, 0, 1, 0, 1]; [-1, 0, 0, 1, 0, -1]; [1, 0, 0, -1, 0, -1]; [-1, 0, 0, -1, 0,1]; [0, 1, 1, 0, 0, 1]; [0, -1, 1, 0, 0, -1]; [0, 1, -1, 0, 0, -1]; [0, - 1, -1, 0, 0, 1]; [0, 1, 0, 1, 1, 0]; [0, -1, 0, 1, -1, 0]; [0, 1, 0, -1, -1, 0]; and [0, -1, 0, -1, 1, 0].

In some embodiments, the first processing module 202 is, for example, configured to acquire the first sequence from a second sequence set, where the second sequence set includes the following 16 sequences with a length of 6: [1, 1, 1, 0, 0, 0]; [-1, 1, -1, 0, 0, 0]; [1, -1, -1, 0, 0, 0]; [-1, -1, 1, 0, 0, 0]; [1, 0, 0, 1, 1, 0]; [-1, 0, 0, 1, -1, 0]; [1, 0, 0, -1, -1, 0]; [-1, 0, 0, -1, 1, 0]; [0, 1, 0, 1, 0, 1]; [0, -1, 0, 1, 0, -1]; [0, 1, 0, -1, 0, -1]; [0, - 1, 0, -1, 0, 1]; [0, 0, 1, 0, 1, 1]; [0, 0, -1, 0, 1, -1]; [0, 0, 1, 0, 1, -1]; and [0, 0, -1, 0, -1, 1].

In some embodiments, the first processing module 202 is, for example, configured to acquire the first sequence from a third sequence set, where the third sequence set includes the following 12 sequences with a length of 4: [1, 1, 0, 0]; [1, -1, 0, 0]; [1, 0, 1, 0]; [1, 0, -1, 0]; [1, 0, 0,1]; [1, 0, 0, -1]; [0, 1, 1, 0]; [0, 1, -1, 0]; [0, 1, 0, 1]; [0, 1, 0, -1]; [0, 0, 1, 1]; and [0, 0, 1, -1].

In some embodiments, the first processing module 202 is, for example, configured to acquire the first sequence according to data to be transmitted, where the data to be transmitted includes information of the first sequence, or the data to be transmitted includes first specified data for indicating information of the first sequence.

In some embodiments, the first processing module 202 is, for example, configured to acquire the first sequence according to at least one pilot.

In some embodiments, the first processing module 202 is, for example, configured to acquire the first sequence according to first data.

In some embodiments, the first communication module 201 is, for example, configured to not reflect a signal at a position corresponding to a zero element of the first sequence; and to reflect a signal at a position corresponding to a non-zero element of the first sequence, according to first data and/or the non-zero element.

In some embodiments, the first communication module 201 is, for example, configured to acquire second data according to first data and the first sequence; and perform the backscatter communication according to the second data, where the second data includes at least one zero symbol and/or at least one non-zero symbol.

In some embodiments, the first communication module 201 is, for example, configured to not reflect a signal at a position corresponding to a zero symbol of the second data; and to reflect a signal at a position corresponding to a non-zero symbol of the second data, according to the non-zero symbol.

In some embodiments, the first data includes a bit or a symbol generated according to data to be transmitted, and the data to be transmitted includes at least one of following information: identity information, information of the first sequence, information of at least one pilot, state information, sensing information, indication information, load data, and a specified message.

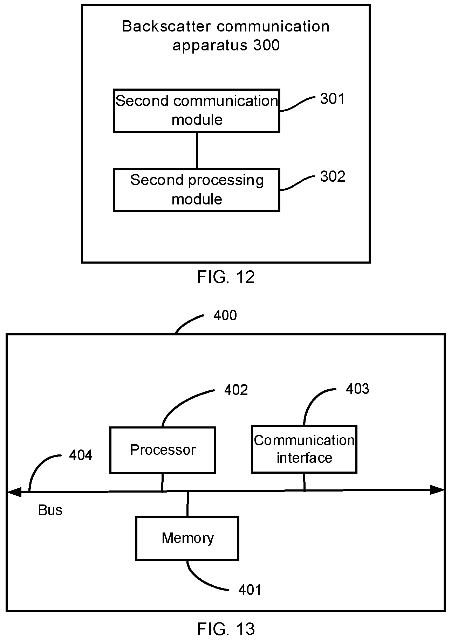

FIG. 12 is a structural schematic diagram of another backscatter communication apparatus, provided by the embodiments of the present disclosure. As shown in FIG. 12, the backscatter communication apparatus 300 includes: a second communication module 301 and a second processing module 302.

The second processing module 302 is configured to acquire a first sequence, where the first sequence includes at least one zero element and/or at least one non-zero element; and perform detection on a backscatter signal according to the first sequence, to acquire a detection result.

In some embodiments, the second communication module 301 is configured to receive the backscatter signal.

In some embodiments, a value of the non-zero element includes at least one of: 1, 1i, -1 and -1i.

In some embodiments, the second processing module 302 is, for example, configured to acquire the first sequence from at least one sequence set; where the at least one sequence set includes at least one non-orthogonal sequence set and/or at least one orthogonal sequence set, the at least one non-orthogonal sequence set includes N sequences with a length of L, N is an integer greater than 1 and N is greater than L, or the at least one non-orthogonal sequence set includes an equiangular tight frame (ETF) sequence set.

In some embodiments, the second processing module 302 is, for example, configured to perform detection on a backscatter signal of at least one pilot, and acquire a detection result of the at least one pilot; and acquire the first sequence according to the detection result of the at least one pilot.

In some embodiments, the second processing module 302 is, for example, configured to perform sequence identification according to the backscatter signal, acquire at least one identified sequence, and use the at least one identified sequence as the first sequence.

In some embodiments, the second processing module 302 is, for example, configured to acquire transmitted data according to the detection result, and acquire at least one of following information from the transmitted data: identity information, information of the first sequence, information of at least one pilot, state information, sensing information, indication information, load data, and a specified message.

In a case where the functions of the abovementioned integrated modules are implemented in the form of hardware, the embodiments of the present disclosure provide a structure of a communication apparatus involved in the above embodiments. As shown in FIG. 13, the communication apparatus 400 includes a communication interface 403, a processor 402 and a bus 404. In some embodiments, the communication apparatus may further include a memory 401.

The processor 402 may be modules and circuits that implement or perform various exemplary logical blocks described in conjunction with the embodiments of the present disclosure. The processor 402 may be a central processing unit, a general-purpose processor, a digital signal processor, an application specific integrated circuit, a field programmable gate array or other programmable logic devices, a transistor logic device, a hardware component or any combination thereof. It may implement or perform various exemplary logical blocks, modules and circuits described in conjunction with the embodiments of the present disclosure. The processor 402 may also be a combination that implements computing functions, for example, including a combination of one or more microprocessors, a combination of a digital signal processor (DSP) and a microprocessor, or the like.

The communication interface 403 is configured to connect with other devices via a communication network. The communication network may be an Ethernet, a radio access network, a wireless local area network (WLAN), or the like.

The memory 401 may be, but not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 401 may exist independently of the processor 402, and the memory 401 may be connected to the processor 402 via the bus 404 and is used for storing instructions or program codes. The processor 402, when calling and executing the instructions or program codes stored in the memory 401, is capable of implementing the backscatter communication method provided by the embodiments of the present disclosure.

As another possible implementation, the memory 401 may also be integrated with the processor 402.

The bus 404 may be an extended industry standard architecture (EISA) bus or the like. Buses 404 may be divided into address buses, data buses, control buses, and the like. For the convenience of representation, only one thick line is used in FIG. 13 for representation, but it does not mean that there is only one bus or one type of bus.

Some embodiments of the present disclosure provide a computer readable storage medium (e.g., a non-transitory computer readable storage medium), and the computer readable storage medium has stored computer program instructions therein that, when running on a computer, cause the computer to perform the backscatter communication method as described in any of the above-mentioned embodiments.

In an exemplary implementation, the computer may be any one of the first node, the second node, the communication apparatus, or the backscatter communication apparatus, and the present disclosure does not limit the form of the computer.

In some examples, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage medium described in the present disclosure may represent one or more devices and/or other machine-readable storage media for storing information. The term "machine-readable storage medium" may include, but be not limited to, a wireless channel and various other media capable of storing, containing, and/or carrying instructions and/or data.

Some embodiments of the present disclosure also provide a computer program product including instructions, and the computer program product, when running on a computer, causes the computer to perform the backscatter communication method as described in any of the above-mentioned embodiments.

The foregoing is only the implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be determined based on the protection scope of claims.

**Claims**

1. A backscatter communication method, **characterized by** comprising:

   acquiring a first sequence, wherein the first sequence comprises at least one zero element and/or at least one non-zero element; and
   performing backscatter communication based on the first sequence.

2. The method according to claim 1, wherein a value of the non-zero element comprises at least one of: 1, 1i, -1 and -1i.

3. The method according to claim 1, wherein a length of the first sequence is L, L is an integer greater than 1; and a number of zero elements of the first sequence is equal to an integer obtained by rounding down L/2, or a number of zero elements of the first sequence is equal to an integer obtained by rounding up L/2, or a number of zero elements of the first sequence is equal to L minus 1, or a number of zero elements of the first sequence is equal to 1.

4. The method according to claim 1, wherein acquiring the first sequence, comprises:
   acquiring the first sequence from at least one sequence set; wherein the at least one sequence set comprises at least one non-orthogonal sequence set and/or at least one orthogonal sequence set, the at least one non-orthogonal sequence set comprises N sequences with a length of L, N is an integer greater than 1 and N is greater than L, L is an integer greater than 1, or the at least one non-orthogonal sequence set comprises an equiangular tight frame (ETF) sequence set.

5. The method according to claim 1, wherein acquiring the first sequence, comprises:
   acquiring the first sequence from a first sequence set, wherein the first sequence set comprises following 16 sequences with a length of 6:

   $$[1, 0, 1, 0, 1, 0];$$

[-1, 0, 1, 0, -1, 0];

[1, 0, -1, 0, -1, 0];

[-1, 0, -1, 0, 1, 0];

[1, 0, 0, 1, 0, 1];

[-1, 0, 0, 1, 0, -1];

[1, 0, 0, -1, 0, -1];

[-1, 0, 0, -1, 0, 1];

[0, 1, 1, 0, 0, 1];

[0, -1, 1, 0, 0, -1];

[0, 1, -1, 0, 0, -1];

[0, -1, -1, 0, 0, 1];

[0, 1, 0, 1, 1, 0];

[0, -1, 0, 1, -1, 0];

[0, 1, 0, -1, -1, 0];

[0, -1, 0, -1, 1, 0].

6. The method according to claim 1, wherein acquiring the first sequence, comprises:
acquiring the first sequence from a second sequence set, wherein the second sequence set comprises following 16 sequences with a length of 6:

[1, 1, 1, 0, 0, 0];

[-1, 1, -1, 0, 0, 0];

[1, -1, -1, 0, 0, 0];

[-1, -1, 1, 0, 0, 0];

[1, 0, 0, 1, 1, 0];

[-1, 0, 0, 1, -1, 0];

[1, 0, 0, -1, -1, 0];

[-1, 0, 0, -1, 1, 0];

[0, 1, 0, 1, 0, 1];

[0, -1, 0, 1, 0, -1];

[0, 1, 0, -1, 0, -1];

[0, -1, 0, -1, 0, 1];

[0, 0, 1, 0, 1, 1];

[0, 0, -1, 0, 1, -1];

[0, 0, 1, 0, -1, -1];

[0, 0, -1, 0, -1, 1].

7. The method according to claim 1, wherein acquiring the first sequence, comprises:
acquiring the first sequence from a third sequence set, wherein the third sequence set comprises following 12 sequences with a length of 4:

[1, 1, 0, 0];

[1, -1, 0, 0];

[1, 0, 1, 0];

[1, 0, -1, 0];

[1, 0, 0, 1];

[1, 0, 0, -1];

[0, 1, 1, 0];

[0, 1, -1, 0];

[0, 1, 0, 1];

[0, 1, 0, -1];

[0, 0, 1, 1];

[0, 0, 1, -1].

8. The method according to claim 1, wherein acquiring the first sequence, comprises:

acquiring the first sequence according to data to be transmitted;
wherein the data to be transmitted comprises information of the first sequence, or the data to be transmitted comprises first specified data for indicating information of the first sequence.

9. The method according to claim 1, wherein acquiring the first sequence, comprises:
acquiring the first sequence according to at least one pilot.

10. The method according to claim 1, wherein acquiring the first sequence, comprises:
acquiring the first sequence according to first data.

11. The method according to claim 1, wherein performing the backscatter communication based on the first sequence, comprises:

not reflecting a signal at a position corresponding to a zero element of the first sequence; and
reflecting a signal at a position corresponding to a non-zero element of the first sequence, according to first data and/or the non-zero element.

12. The method according to claim 1, wherein performing the backscatter communication based on the first sequence, comprises:

acquiring second data according to first data and the first sequence; and
performing the backscatter communication according to the second data;
wherein the second data comprises at least one zero symbol and/or at least one non-zero symbol.

13. The method according to claim 12, wherein performing the backscatter communication according to the second data, comprises:

not reflecting a signal at a position corresponding to a zero symbol of the second data;
reflecting a signal at a position corresponding to a non-zero symbol of the second data, according to the non-zero symbol.

14. The method according to any one of claims 10 to 13, wherein

the first data comprises a bit or a symbol generated according to data to be transmitted;
wherein the data to be transmitted comprises at least one of following information: identity information, information of the first sequence, information of at least one pilot, state information, sensing information, indication information, load data, and a specified message.

15. A backscatter communication method, **characterized by** comprising:

acquiring a first sequence, wherein the first sequence comprises at least one zero element and/or at least one non-zero element; and
performing detection on a backscatter signal according to the first sequence, to acquire a detection result.

16. The method according to claim 15, wherein a value of the non-zero element comprises at least one of: 1, 1i, -1 and -1i.

17. The method according to claim 15, wherein acquiring the first sequence, comprises:
acquiring the first sequence from at least one sequence set; wherein the at least one sequence set comprises at least one non-orthogonal sequence set and/or at least one orthogonal sequence set, the at least one non-orthogonal sequence set comprises N sequences with a length of L, N is an integer greater than 1 and N is greater than L, L is an integer greater than 1, or the at least one non-orthogonal sequence set comprises an equiangular tight frame (ETF) sequence set.

18. The method according to claim 15, wherein acquiring the first sequence, comprises:

performing detection on a backscatter signal of at least one pilot, and acquiring a detection result of the at least one pilot; and
acquiring the first sequence according to the detection result of the at least one pilot.

19. The method according to claim 15, wherein acquiring the first sequence, comprises:

performing sequence identification according to the backscatter signal, acquiring at least one identified sequence, and using the at least one identified sequence as the first sequence.

20. The method according to claim 15, further comprising:

acquiring transmitted data according to the detection result, and acquiring at least one of following information from the transmitted data: identity information, information of the first sequence, information of at least one pilot, state information, sensing information, indication information, load data, and a specified message.

21. A communication apparatus, **characterized by** comprising: a memory and a processor; wherein the memory and the processor are coupled; the memory is configured to store instructions executable by the processor; and the processor, when executing the instructions, performs the backscatter communication method according to any one of claims 1 to 20.

22. A computer-readable storage medium, **characterized in that** the computer readable storage medium has stored computer program instructions thereon, and the computer program instructions, when executed on a computer, cause the computer to perform the backscatter communication method according to any one of claims 1 to 20.

**100**

```
┌─────────────────┐                    ┌──────────┐
│ Radio           │                    │ Second   │
│ frequency       │                    │ node     │  103
│ signal source   │                    │          │
└─────────────────┘                    └──────────┘
        101
              First node      102
```

FIG. 1

```
┌────────────────────────────────────────────┐
│         OBTAIN A FIRST SEQUENCE            │   S101
└────────────────────────────────────────────┘
                      │
                      ▼
┌────────────────────────────────────────────┐
│  PERFORM BACKSCATTER COMMUNICATION         │   S102
│  ON THE BASIS OF THE FIRST SEQUENCE        │
└────────────────────────────────────────────┘
```

FIG. 2

```
┌────────────────────────────────────────────┐
│          Acquire a first sequence          │   S101
└────────────────────────────────────────────┘
                      │
                      ▼
┌────────────────────────────────────────────┐
│   Not reflect a signal at a position       │   S1021a
│  corresponding to a zero element of the    │
│  first sequence                            │
└────────────────────────────────────────────┘
                      │
                      ▼
┌────────────────────────────────────────────┐
│ Reflect a signal at a position corresponding│
│ to a non-zero element of the first sequence,│  S1022a
│ according to first data and/or the non-zero │
│ element                                     │
└────────────────────────────────────────────┘
```

FIG. 3

Acquire a first sequence — S101

Acquire second data according to first data and the first sequence — S1021b

Perform backscatter communication according to the second data — S1022b

FIG. 4

Acquire a first sequence from at least one sequence set — S1011

Perform backscatter communication based on the first sequence — S102

FIG. 5

Acquire a first sequence according to data to be transmitted — S1012

Perform backscatter communication based on the first sequence — S102

FIG. 6

Acquire a first sequence according to first data — S1013

Perform backscatter communication based on the first sequence — S102

FIG. 7

Acquire a first sequence according to at least one pilot — S1014

Perform backscatter communication based on the first sequence — S102

FIG. 8

| Acquire a first sequence | S201 |

| Perform detection on a backscatter signal according to the first sequence, to acquire a detection result | S202 |

FIG. 9

| Acquire a first sequence | S201 |

| Perform detection on a backscatter signal according to the first sequence, to acquire a detection result | S202 |

| A second node acquires transmitted data according to the detection result | S203 |

FIG. 10

Backscatter communication apparatus 200

| First communication module | 201 |

| First processing module | 202 |

FIG. 11

Backscatter communication
apparatus 300

Second communication
module — 301

Second processing
module — 302

FIG. 12

— 400

— 402          — 403

— 404    Processor    Communication
interface

←——————————————→

Bus

Memory

— 401

FIG. 13

## INTERNATIONAL SEARCH REPORT

| International application No. |
| --- |
| **PCT/CN2023/141489** |

| A. | CLASSIFICATION OF SUBJECT MATTER |
| --- | --- |

H04B7/22(2006.01)i

According to International Patent Classification (IPC) or to both national classification and IPC

| B. | FIELDS SEARCHED |
| --- | --- |

Minimum documentation searched (classification system followed by classification symbols)

IPC：H04B,H04L,G06K

Documentation searched other than minimum documentation to the extent that such documents are included in the fields searched

Electronic data base consulted during the international search (name of data base and, where practicable, search terms used)

CNTXT, ENTXTC, ENTXT, VEN: 反向散射, 背向散射, 序列, 前导, 符号, 调制, 正交, 二进制, 等角紧框架, 反射, 能量吸收, 集合, backscatter, sequence, symbol, preamble, binary, set, reflect, energy, ETF, OOK, ASK, BPSK

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 112073082 A (CHENGDU HUAWEI TECHNOLOGIES CO., LTD.) 11 December 2020 (2020-12-11) description, paragraphs 67-112 | 1-3, 8-16, 18-22 |
| X | WO 2020244392 A1 (HUAWEI TECHNOLOGIES CO., LTD.) 10 December 2020 (2020-12-10) description, pages 8-10 | 1-3, 8-16, 18-22 |
| A | CN 101546370 A (SONY CORP.) 30 September 2009 (2009-09-30) entire document | 1-22 |
| A | CN 109412992 A (SHANGHAI JIAO TONG UNIVERSITY) 01 March 2019 (2019-03-01) entire document | 1-22 |
| A | WO 2022078331 A1 (VIVO MOBILE COMMUNICATION CO., LTD.) 21 April 2022 (2022-04-21) entire document | 1-22 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 March 2024** | **03 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/141489**

| Patent document cited in search report | | | Publication date (day/month/year) | Patent family member(s) | | | Publication date (day/month/year) |
|---|---|---|---|---|---|---|---|
| CN | 112073082 | A | 11 December 2020 | WO | 2020233231 | A1 | 26 November 2020 |
| | | | | EP | 3952119 | A1 | 09 February 2022 |
| | | | | US | 2022077886 | A1 | 10 March 2022 |
| WO | 2020244392 | A1 | 10 December 2020 | CN | 112054982 | A | 08 December 2020 |
| CN | 101546370 | A | 30 September 2009 | EP | 2105861 | A1 | 30 September 2009 |
| | | | | US | 2009243804 | A1 | 01 October 2009 |
| | | | | JP | 2009232372 | A | 08 October 2009 |
| CN | 109412992 | A | 01 March 2019 | | None | | |
| WO | 2022078331 | A1 | 21 April 2022 | CN | 114374406 | A | 19 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211730962